# EUROPÄISCHE PATENTSCHRIFT

(11) **EP 0 762 174 B1**
(45) Veröffentlichungstag und Bekanntmachung des Hinweises auf die Patenterteilung: **09.01.2002**
(21) Anmeldenummer: 96114254.4
(22) Anmeldetag: 05.09.1996
(51) Int. Cl.: G02B 17/00, F21V 7/08, F21V 7/00, H04N 1/028, G02B 19/00

(54) **Vorrichtung zur linienförmigen Beleuchtung von Blattgut, wie z.B. Banknoten oder Wertpapiere**
Device for linear illumination of sheet material, e.g. bank notes or securities
Dispositif d'éclairage linéaire de matériaux sous forme de feuilles comme par exemple des billets de banque ou papiers de valeur

(30) Priorität: 06.09.1995 DE 19532877
(43) Veröffentlichungstag der Anmeldung: 12.03.1997
(73) Patentinhaber: Giesecke & Devrient GmbH, 81677 München (DE)
(72) Erfinder: Deckenbach, Wolfgang, 81373 München (DE); Stenzel, Gerhard, Dr., 82110 Germering (DE)
(74) Vertreter: Klunker . Schmitt-Nilson . Hirsch

(56) Entgegenhaltungen:
- EP-A- 0 021 093
- EP-A- 0 228 713
- FR-A- 2 090 026
- US-A- 4 095 881
- US-A- 4 422 100
- PATENT ABSTRACTS OF JAPAN vol. 010, no. 272 (E-437), 16.September 1986 & JP 61 095525 A (CANON INC), 14.Mai 1986,
- PATENT ABSTRACTS OF JAPAN vol. 004, no. 180 (P-040), 12.Dezember 1980 & JP 55 124167 A (CANON INC), 25.September 1980,
- PATENT ABSTRACTS OF JAPAN vol. 009, no. 039 (E-297), 19.Februar 1985 & JP 59 181527 A (FUJITSU KK), 16.Oktober 1984,

## Beschreibung

Die Erfindung betrifft eine Vorrichtung zur linienförmigen Beleuchtung von Blattgut, wie z. B. Banknoten oder Wertpapieren.

Zur optischen Bearbeitung von Blattgut wird das Blattgut im allgemeinen in eine Bearbeitungsanlage eingegeben. Diese weist unter anderem ein Transportsystem und mindestens einen optischen Sensor auf. Das Transportsystem dient dazu, das Blattgut über einen fest vorgegebenen Weg sicher durch die Bearbeitungsanlage zu führen. Die eigentliche optische Bearbeitung geschieht, wenn das Transportsystem das Blattgut durch den optischen Sensor transportiert. Das optische Sensorsystem weist unter anderem mindestens eine Beleuchtungsvorrichtung auf, die das Blattgut in einem bestimmten Wellenlängenbereich beleuchtet. Das vom Blattgut remittierte bzw. transmittierte Licht wird von einem oder mehreren Detektorsystemen detektiert. Das detektierte Licht wird in Signale umgesetzt, die dann in der Bearbeitungsanlage ausgewertet werden.

Die EP-0 021 093 B zeigt eine linienförmige Beleuchtungsvorrichtung mit einer Reflexionseinrichtung, die die Form eines Segments eines mit transparentem Material gefüllten Zylinders mit elliptischer Grundfläche aufweist. Zur Beleuchtung des Blattguts wird die von der Lichtquelle kommende Strahlung zunächst mittels Lichtleiter über eine durchsichtige Fläche in einer ersten Fokuslinie der Reflexionseinrichtung in diese eingekoppelt. Danach wird die Strahlung an der elliptischen Oberfläche auf eine zweite Fokuslinie der Reflexionseinrichtung reflektiert. Um einen Austritt der Strahlung aus der Reflexionseinrichtung zu ermöglichen, ist eine Austrittsfläche vorgesehen, die so ausgebildet ist, daß die an der elliptischen Oberfläche reflektierte Strahlung möglichst senkrecht durch diese Ausgangsfläche hindurchtritt.

Das Blattgut befindet sich in der zweiten Fokuslinie der Reflexionseinrichtung. Zur Beleuchtung des Blattguts wird die Reflexionseinheit direkt auf das Blattgut aufgesetzt, so daß sich Reflexionseinrichtung und Blattgut berühren.

Nachteil dieser Beleuchtungsvorrichtung ist es, daß nur geringe Anteile der von der Lichtquelle emittierten Strahlung in den Lichtleiter eingekoppelt werden. Das von der Lichtquelle emittierte Licht kann somit nur zu relativ geringen Anteilen zur Beleuchtung genutzt werden, so daß nur eine geringe Beleuchtungsstärke erreicht wird. Ferner wird die Reflexionseinrichtung auf das Blattgut aufgesetzt, so daß es durch Abrieb zu Verschleißerscheinungen an der Reflexionseinrichtung und zur Verschmutzung der Reflexionseinrichtung durch den durch Abrieb vom Blattgut entstehenden Staub kommen kann.

Eine weitere linienförmige Beleuchtungsvorrichtung zeigt die EP-0 251 240 A2. Die Beleuchtungsvorrichtung besteht hier aus einem Spiegelsegment eines zylindrischen Spiegels mit elliptischer Grundfläche, das zwei Fokuslinien aufweist. Zusätzlich sind an den elliptischen Grundflächen des Spiegelsegments ebene Spiegel angebracht. Als Lichtquelle werden hier zwei Glühlampen benutzt, deren Glühwendeln in der ersten Fokuslinie des Spiegelsegments angebracht sind.

Das Blattgut befindet sich in der zweiten Fokuslinie des Spiegelsegments und wird durch die am Spiegelsegment teilweise auf die zweite Fokuslinie fokussierte Strahlung beleuchtet.

Ein Nachteil dieser Beleuchtungsvorrichtung ist es, daß das hier gezeigte Spiegelelement nur einen geringen Anteil der von den Glühlampen emittierten Strahlung reflektiert. Weiterhin entsteht durch die Glühlampen eine große Wärmeentwicklung, so daß die Beleuchtungsvorrichtung kontinuierlich gekühlt werden muß, um einen störungsfreien Betrieb gewährleisten zu können.

Aus US 4,422,100 ist es bekannt, eine linienförmige Beleuchtungsvorrichtung mit einem Spiegel zu realisieren, der aus zwei Spiegelsegmenten besteht. Die Spiegelsegmente sind Segmente eines zylindrischen Spiegels mit elliptischer Grundfläche, die zwei Fokuslinien aufweisen, welche durch die Anordnung der Spiegelsegmente in einer ersten bzw. einer zweiten gemeinsamen Fokuslinie zusammenfallen. In der ersten Fokuslinie ist dabei eine Lichtquelle angeordnet, in der zweiten Fokuslinie befindet sich das zu beleuchtende Blattgut. Da eine hohe Beleuchtungsintensität am zu beleuchtenden Blattgut gewünscht ist, wird eine Lichtquelle mit großer Lichtintensität, beispielsweise eine Halogenlampe verwendet. Um die störende Wärmestrahlung nicht an den Ort der zweiten Fokuslinie, d.h. an das zu beleuchtende Blattgut, gelangen zu lassen, werden Hitzefilter eingesetzt.

Ausgehend davon liegt der Erfindung die Aufgabe zugrunde, eine Vorrichtung zur linienförmigen Beleuchtung von Blattgut vorzuschlagen, bei der das von der Lichtquelle emittierte Licht möglichst verlustfrei auf eine Linie fokussiert wird, um so eine möglichst hohe Beleuchtungsstärke zu gewährleisten. Gleichzeitig soll der Anfall von Verlustwärme bei der Lichterzeugung vermieden werden.

Diese Aufgabe wird durch die Merkmale des Hauptanspruchs gelöst.

Der Grundgedanke der Erfindung besteht im wesentlichen darin, als Beleuchtung mehrere Spiegelsegmente zylindrischer Spiegel mit elliptischer Grundfläche und jeweils zwei Fokuslinien vorzusehen. Die Spiegelelemente werden so angeordnet, daß sowohl die ersten als auch die zweiten Fokuslinien aller Spiegelsegmente jeweils in einer ersten bzw. zweiten gemeinsamen Fokuslinie zusammenfallen. In der ersten gemeinsamen Fokuslinie wird eine Lichtquelle , die von Leuchtdioden gebildet wird, vorgesehen, die kaltes Licht emittiert. Das emittierte Licht wird dann durch Reflexion an den Spiegelsegmenten auf das in der zweiten gemeinsamen Fokuslinie befindliche Blattgut fokussiert.

Ein Vorteil der Erfindung ist es, daß durch die beschriebenen Spiegelsegmente die von der Lichtquelle emittierte Strahlung weitestgehend auf das Blattgut fokussiert wird.

Durch die Verwendung einer kalten Lichtquelle wird die bei der Lichterzeugung entstehende Verlustwärme so gering wie möglich gehalten, so daß keine Störungen durch Verlustwärme auftreten.

In einer bevorzugten Ausführungsform der Erfindung sind zwei Spiegelelemente mit gleicher elliptischer Grundfläche vorgesehen. Die Spiegelsegmente sind spiegelsymmetrisch zu der Ebene angeordnet, die durch die erste Fokuslinie und die große Achse der Ellipse aufgespannt wird. Der Abstand der dem Blattgut zugewandten Kante der Spiegelsegmente wird von der ersten Fokuslinie parallel zur großen Achse der Ellipse gemessen und so gewählt, daß der Abstand kleiner oder gleich dem Abstand der Fokuslinien ist. Der Abstand der dem Blattgut abgewandten Kanten der Spiegelsegmente wird vom Scheitelpunkt der Ellipse parallel zur großen Achse gemessen und so gewählt, daß ein möglichst großer Anteil des von der Lichtquelle emittierten Lichts an den Spiegelsegmenten reflektiert wird. Diese Kanten können sich auch im Scheitelpunkt der Ellipse berühren.

Wird der Abstand der dem Blattgut zugewandten Kanten der Spiegelsegmente geringfügig kleiner als der Abstand der Fokuslinien gewählt, so kann eine Fokussierung von über 95 % des von der Lichtquelle emittierten Lichts erreicht werden. Weiterhin wird dadurch ein Berühren der Spiegelelemente mit dem Blattgut verhindert, so daß ein Verschleiß der Spiegelsegmente bzw. eine Staubentwicklung durch Abrieb vom Blattgut vermieden wird.

In einer Weiterbildung der Erfindung kann eine vollständige Fokussierung des von der Lichtquelle emittierten Lichts dadurch erreicht werden, indem die nicht vom

Spiegelsegment reflektierten Anteile durch ein zusätzliches optisches System auf die zweite gemeinsame Fokuslinie fokussiert werden.

Eine andere Weiterbildung der Erfindung besteht darin, Detektoren vorzusehen, die das von der Lichtquelle emittierte Licht auf Veränderungen überwachen.

Weitere Merkmale der Erfindung ergeben sich aus den Unteransprüchen. Nachfolgend werden einige Ausführungsbeispiele der Erfindung anhand der Figuren beschrieben. Es zeigen:
- Fig. 1: Prinzipskizze einer bevorzugten Ausführungsform mit Spiegelsegmenten und optischem System,
- Fig. 2: geometrische Grundlagen zur Beschreibung der bevorzugten Ausführungsform,
- Fig. 3: Veranschaulichung der Verhältnisse von direktem und reflektiertem Licht,
- Fig. 4: Prinzipskizze einer ersten Ausführungsform mit unterschiedlichen Spiegelsegmenten,
- Fig. 5: Prinzipskizze einer zweiten Ausführungsform mit unterschiedlichen Spiegelsegmenten,
- Fig. 6: Funktionsprinzip der bevorzugten Ausführungsform mit optischem System,
- Fig. 7: Prinzipskizze einer Ausführungsform mit Filtern bzw. Polarisatoren,
- Fig. 8: Prinzipskizze einer Ausführungsform mit ebenen Spiegeln,
- Fig. 9: Prinzipskizze einer Ausführungsform mit Detektoren,
- Fig. 10: Prinzipskizze einer Ausführungsform mit Detektoren und ebenen Spiegeln.

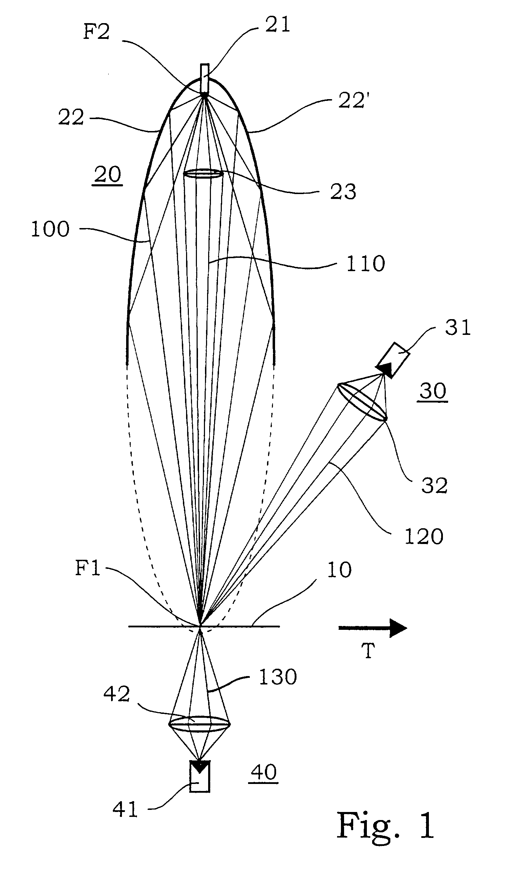

Fig. 1 zeigt die Prinzipskizze einer bevorzugten Ausführungsform der Erfindung. Das Blattgut 10 wird hier mittels einer linienförmigen Beleuchtung 20 beleuchtet. Das Blattgut befindet sich in einer Fokuslinie F1 der linienförmigen Beleuchtung 20 und wird von einer hier nicht dargestellten Transportvorrichtung in einer Richtung T senkrecht zur Fokuslinie F1 transportiert.

Die linienförmige Beleuchtung 20 besteht aus einer Lichtquelle 21, die kaltes Licht emittiert. Die Lichtquelle 21 ist in einer Fokuslinie F2 der Beleuchtung 20 angebracht.

Das emittierte Licht wird durch Reflexion an zwei Spiegelsegmenten 22 und 22' der Beleuchtung 20 teilweise auf die Fokuslinie F1 fokussiert. Die Spiegelsegmente 22 und 22' sind jeweils Segemente eines zylindrischen Spiegels mit gleicher elliptischer Grundfläche, die jeweils zwei Fokuslinien F1 und F2 aufweisen. Die Spiegelsegmente 22 und 22' sind so angeordnet, daß sowohl die ersten als auch die zweiten Fokuslinien der Spiegelsegmente 22 und 22' jeweils in der ersten gemeinsamen Fokuslinie F1 und der zweiten gemeinsamen Fokuslinie F2 der Beleuchtung 20 zusammenfallen.

Das von der Lichtquelle 21 emittierte Licht läßt sich in einen reflektierten Anteil 100 und einen direkten Anteil 110 aufteilen. Der reflektierte Anteil 100 wird vor der Beleuchtung des Blattguts an den Spiegelsegmenten 22 bzw. 22' reflektiert. Der direkte Anteil 110 trifft ohne Reflexion auf das Blattgut. Der direkte Anteil 110 kann optional mittels eines optischen Systems 23 auf die Fokuslinie F1 fokussiert werden.

Als Lichtquelle 21 eignet sich beispielsweise eine Reihe von Leuchtdioden. Aufgrund ihrer geringen räumlichen Ausdehnung können Leuchtdioden näherungsweise als Punktlichtquellen angesehen werden, die exakt in der Fokuslinie F2 angebracht sind und von den Spiegelsegmenten 22 und 22' bzw. der optischen Einrichtung 23 auch exakt auf einen Punkt der Fokuslinie F1 abgebildet werden. Abbildungsverluste aufgrund der räumlichen Ausdehnung der Lichtquelle 21 können so weitestgehend vermieden werden. Die Leuchtdioden werden innerhalb der Reihe möglichst dicht aneinander angebracht, so daß eine quasi gleichmäßige Beleuchtung der Fokuslinie F1 erreicht wird.

Zur weiteren Erhöhung der Lichtausbeute der Leuchtdioden können diese gepulst betrieben werden. Die durch einen kurzen Puls erzeugten Lichtblitze weisen eine höhere Intensität auf als im Dauerbetrieb der Leuchtdioden.

Das vom Blattgut remittierte Licht 120 bzw. das transmittierte Licht 130 wird mittels Detektoren erfaßt. Der Übersichtlichkeit halber sind hier lediglich zwei Detektoren 30 und 40 dargestellt. Jeder dieser Detektoren 30, 40 weist unter anderem ein optisches System 32 bzw. 42 auf, das das remittierte Licht 120 bzw. das transmittierte Licht 130 teilweise auf einen Lichtempfänger 31 bzw. 41 fokussiert. Der Lichtempfänger 31 bzw. 41 wandelt das ankommende Licht in Signale um, die dann von einer hier nicht dargestellten Einheit der Bearbeitungsanlage bearbeitet werden können.

Als Lichtempfänger 31 eignen sich beispielsweise CCD-Arrays oder Photodioden. Die Photodioden können entweder einzeln oder in Gruppen angeordnet werden.

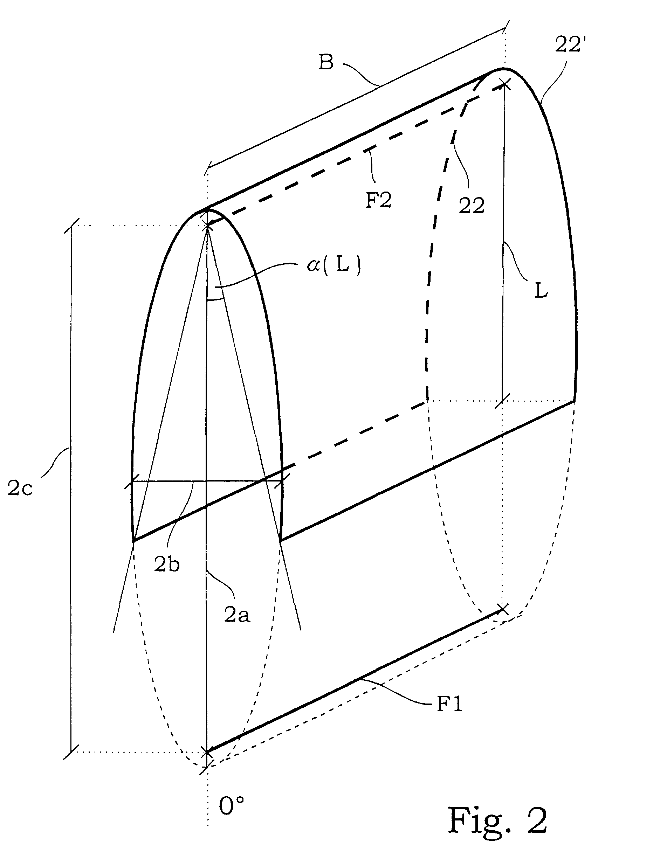

Die speziellen geometrischen Eigenschaften der Spiegelsegmente 22 und 22' zeigt die Fig. 2. Die elliptische Grundfläche der Spiegelsegmente wird durch die Länge der großen Achse 2a und die Länge der kleinen Achse 2b definiert. Der Abstand 2c der beiden gemeinsamen Fokuslinien F1 und F2 ergibt sich mit c = (a² - b²)^{1/2}. Die Spiegelsegmente 22 und 22' sind spiegelsymmetrisch zu der Ebene, die durch die Fokuslinie F2 und die große Achse der Ellipse 2a aufgespannt wird.

Die Breite B der Spiegelsegmente 22 und 22' wird vorzugsweise größer oder gleich der Breite des Blattguts gewählt. Der Abstand L der dem Blattgut zugewandten Kante der Spiegelsegmente 22 und 22' wird von der Fokuslinie F2 parallel zur großen Achse 2a gemessen. Der Abstand L wird kleiner dem Abstand 2c der Fokuslinien gewählt, so daß sich die Spiegelsegmente 22 und 22' und das in der Fokuslinie F1 geführte Blattgut 10 nicht berühren.

Abhängig vom Abstand L ergibt sich ein Öffnungswinkel α. Dieser läßt sich mit Hilfe der Exzentrizität e = c/a der Ellipse analytisch bestimmen. Es ergibt sich α(L) = arccos (L/(a + e(L-c)).

Der von der Lichtquelle 21 in den Winkelbereich 0° ± α emittierte Lichtanteil entspricht dem direkten Anteil 110. Das in die anderen Winkelbereiche emittierte Licht der Lichtquelle 21 wird von den Spiegelsegmenten 22 und 22' reflektiert und bildet den reflektierten Anteil 100. Bei bekannter Abstrahlcharakteristik der Lichtquelle läßt sich berechnen, welcher Anteil des emittierten Lichts der Lichtquelle 21 von den Spiegelsegmenten 22 und 22' abhängig vom Abstand L reflektiert wird.

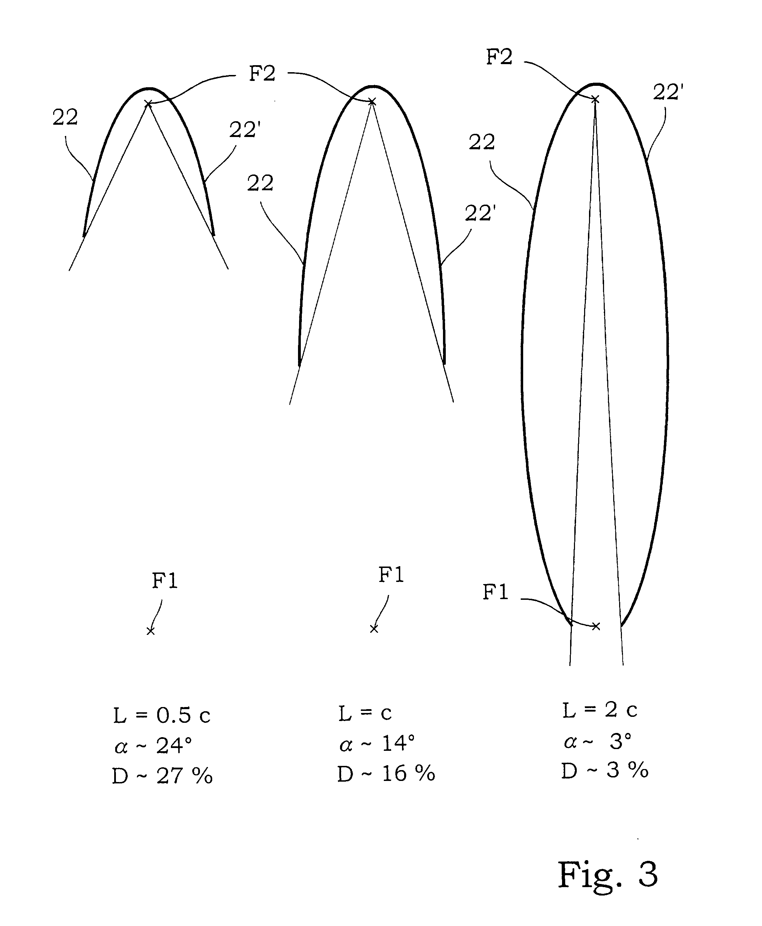

In der Fig. 3 sind drei Spiegelsegmente 22 mit unterschiedlichen Abständen L dargestellt. Der zum entsprechenden Abstand L berechnete Öffnungswinkel α ist angegeben. Geht man von einer Lichtquelle 21 aus, die ihr Licht gleichmäßig verteilt in einen Winkelbereich 0° ± δ emittiert, so läßt sich aus dem Öffnungswinkel α der prozentuale Anteil D des direkten Lichts 110 mittels der Relation D = α/δ berechnen.

Es zeigt sich, daß für die bevorzugte Ausführungsform der Erfindung mit L ~ c und einem Winkelbereich ± δ mit δ = 90° ein prozentualer Anteil D von ca. 16 % direktem Licht 110 ergibt. Der prozentuale Anteil R des reflektierten Lichts 100 ergibt sich zu R = 100 % - D, also in diesem Fall zu 84 %.

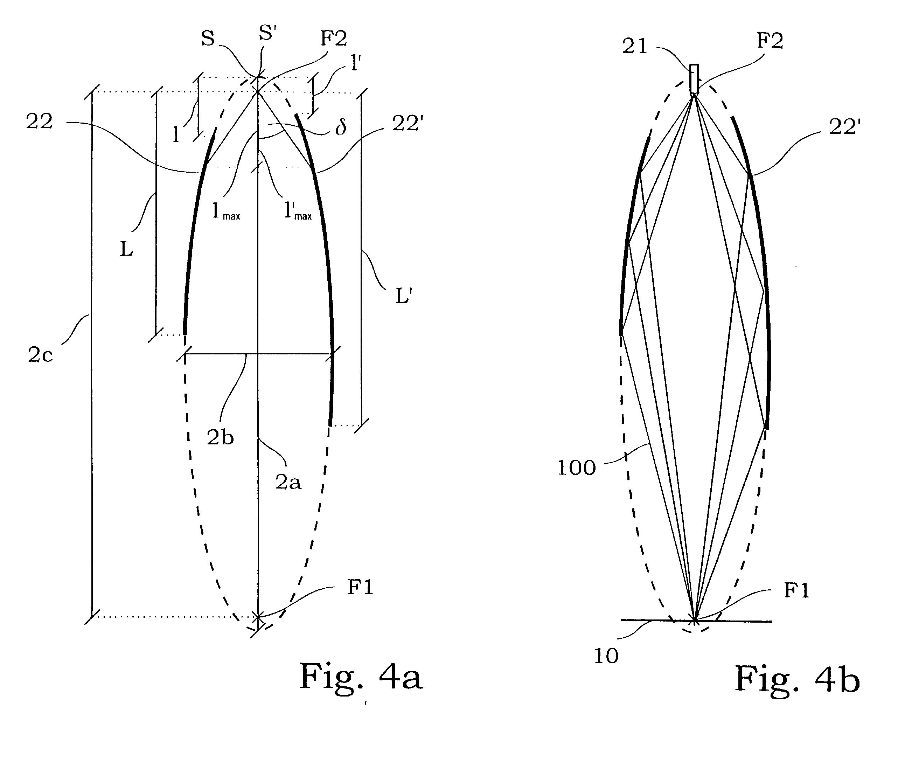

Die Fig. 4 zeigt eine Prinzipskizze einer ersten Ausführungsform mit unterschiedlichen Spiegelsegmenten 22 und 22'. Auch hier sind, wie schon in der bevorzugten Ausführungsform ausgeführt, die Spiegelsegmente 22 und 22' Segmente eines zylindrischen Spiegels mit gleicher elliptischer Grundfläche. Der Abstand L bzw. L' der dem Blattgut zugewandten Kanten der Spiegelsegmente ist jedoch unterschiedlich, so daß keine Spiegelsymmetrie zwischen den Spiegelelementen 22 und 22' besteht. Weiterhin wurde der Abstand l bzw. l' der dem Blattgut abgewandten Kanten der Spiegelsegmente unterschiedlich gewählt. Der Abstand l bzw. l' wird jeweils vom Scheitelpunkt S bzw. S' der Ellipse parallel zur großen Achse der Ellipse 2a gemessen.

Vorzugsweise wird sowohl der Abstand l als auch der Abstand l' so gewählt, daß bei vorgegebenem Abstand L bzw. L' ein möglichst großer Anteil des von der Lichtquelle 21 emittierten Lichts an den Spiegelsegmenten 22 bzw. 22' reflektiert wird. Die Abstände l bzw. l' müssen hierzu bevorzugt kleiner als ein maximaler Abstand lₘₐₓ gewählt werden. Der Abstand lₘₐₓ hängt von dem Winkelbereich δ ab, in den die Lichtquelle 21 ihr Licht emittiert sowie von der Länge der großen Achse a und der kleinen Achse b. Der Abstand lₘₐₓ ergibt sich zu lₘₐₓ = a (a-c) (1 + cos δ) / (a-c cos δ) für 0° ≤ δ ≤ 180°. Wird der Abstand l bzw. l' kleiner als lₘₐₓ gewählt, so werden bestimmte Bereiche des zugehörigen Spiegelsegments nicht beleuchtet. Wird der Abstand l bzw. l' größer als lₘₐₓ gewählt, so wird bei vorgegebenem Abstand L bzw. L' nicht der größtmögliche Anteil des von der Lichtquelle 21 emittierten Lichts reflektiert.

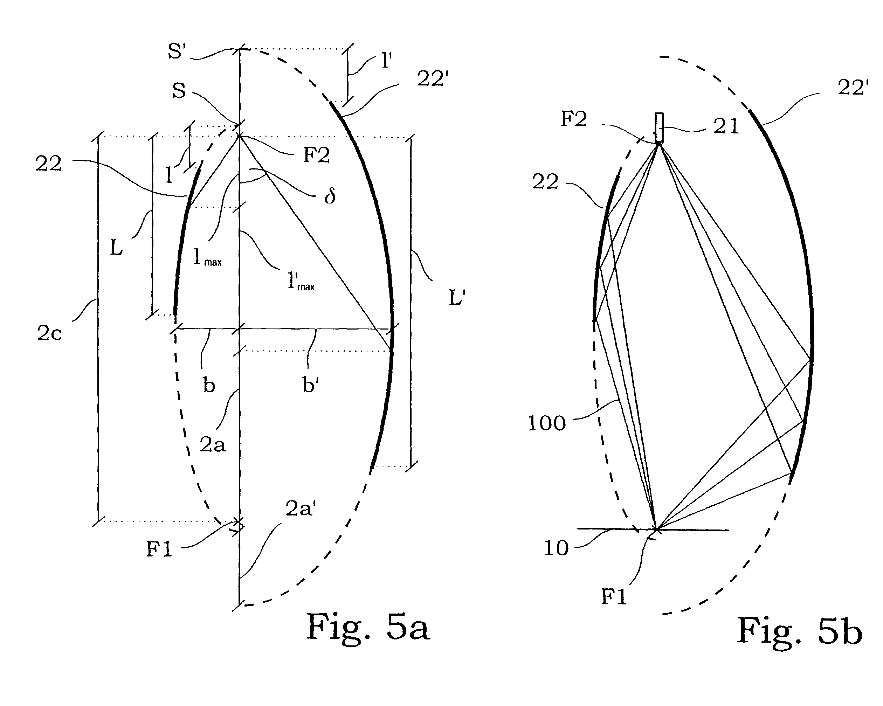

Die Fig. 5 zeigt eine zweite Ausführungsform mit unterschiedlichen Spiegelsegmenten 22 bzw. 22'. In dieser Ausführungsform sind nicht nur die Abstände l und L bzw. l' und L' unterschiedlich gewählt, sondern auch die Länge der großen Achse a bzw. a' und die der kleinen Achse b bzw. b'. Die Verhältnisse der Längen a und b bzw. a' und b' der Spiegelsegmente 22 bzw. 22' sind jedoch so gewählt, daß der Abstand 2c der beiden Fokuslinien F1 und F2 bei beiden Spiegelsegmenten 22 und 22' gleich ist. Die Spiegelsegmente 22 und 22' sind so angeordnet, daß ihre Fokuslinien jeweils in einer gemeinsamen Fokuslinie F1 bzw. F2 zusammenfallen. Bedingt durch die unterschiedlichen Längen a und a' bzw. b und b' ergeben sich nun für jedes Spiegelsegment 22 bzw. 22' verschiedene Abstände lₘₐₓ bzw. l'ₘₐₓ.

Die in Fig. 4 und Fig. 5 gezeigten Ausführungsformen können vorteilhaft sein, wenn beispielsweise aus bautechnischen Gründen ein Einbau einer bevorzugten Ausführungsform nicht möglich ist. Die Parameter der Spiegelsegmente 22 und 22' können, wie oben beschrieben, modifiziert werden, so daß abhängig von den bautechnischen Gründen eine größtmögliche Fokussierung des von der Lichtquelle 21 emittierten Lichts in der gemeinsamen Fokuslinie F1 erreicht wird.

Emittiert die Lichtquelle 21 lediglich in einen kleinen Winkelbereich ± δ, so können bei Bedarf die außerhalb dieses Winkelbereichs liegenden und somit nicht beleuchteten Bereiche der Spiegelsegmente 22 und 22' weggelassen oder anders ausgestaltet werden.

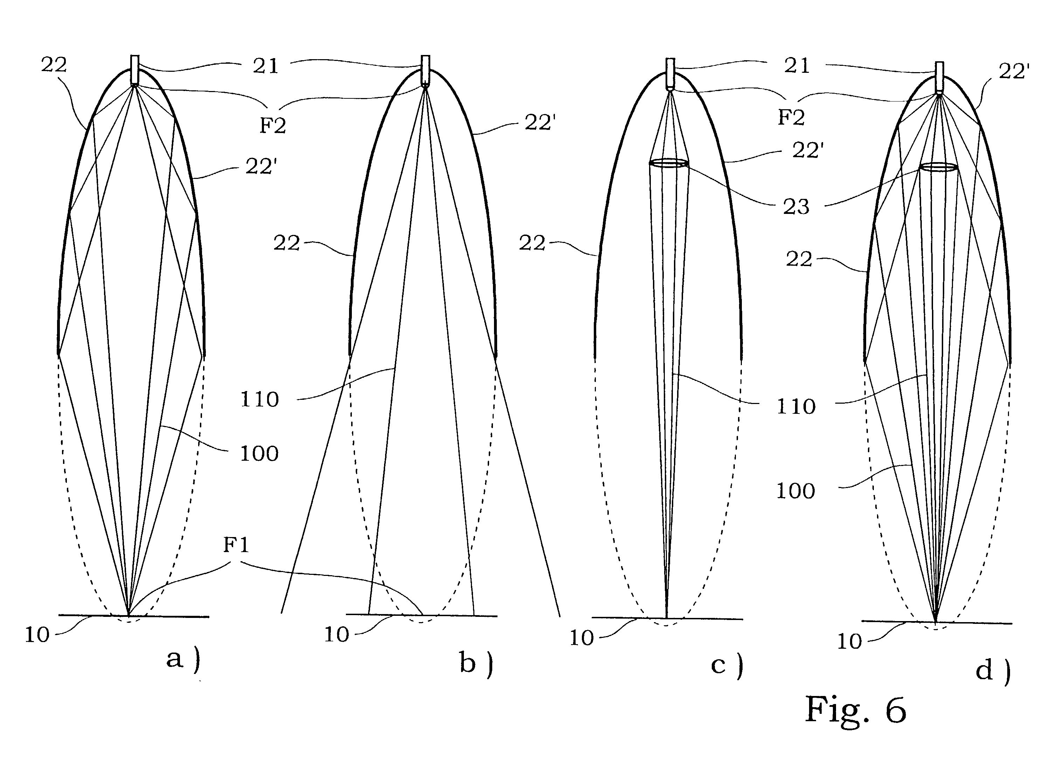

Die Fig. 6 zeigt das Funktionsprinzip der bevorzugten Ausführungsform mit einem optischen System. Die Fig. 6a zeigt die bevorzugte Ausführungsform mit L ~ c, bei der der reflektierte Anteil 100 des von der Lichtquelle 21 emittierten Lichts auf die Fokuslinie F1 fokussiert. Hier wird der prozentuale Anteil R = 84 % des reflektierten Lichts zur Beleuchtung der Banknote genutzt.

Die Fig. 6b zeigt den direkten Anteil 110 des von der Lichtquelle 21 emittierten Lichts. Wie man sieht, wird dieser nicht auf das Blattgut fokussiert, so daß sich ein Verlust des prozentualen Anteil D des direkten Lichts 110 von 16 % ergibt.

Fig. 6c zeigt, wie der direkte Anteil 110 mittels einer Weiterbildung der ersten Ausführungsform durch ein optisches System 23 auf das Blattgut fokussiert wird.

In Fig. 6d ist die Weiterbildung der Erfindung durch das optische System 23 nochmals mit dem direkten Anteil 110 und dem reflektierten Anteil 100 dargestellt. Durch die zusätzliche Fokussierung des direkten Anteils 110 wird nun das von der Lichtquelle 21 emittierte Licht vollständig auf das Blattgut fokussiert.

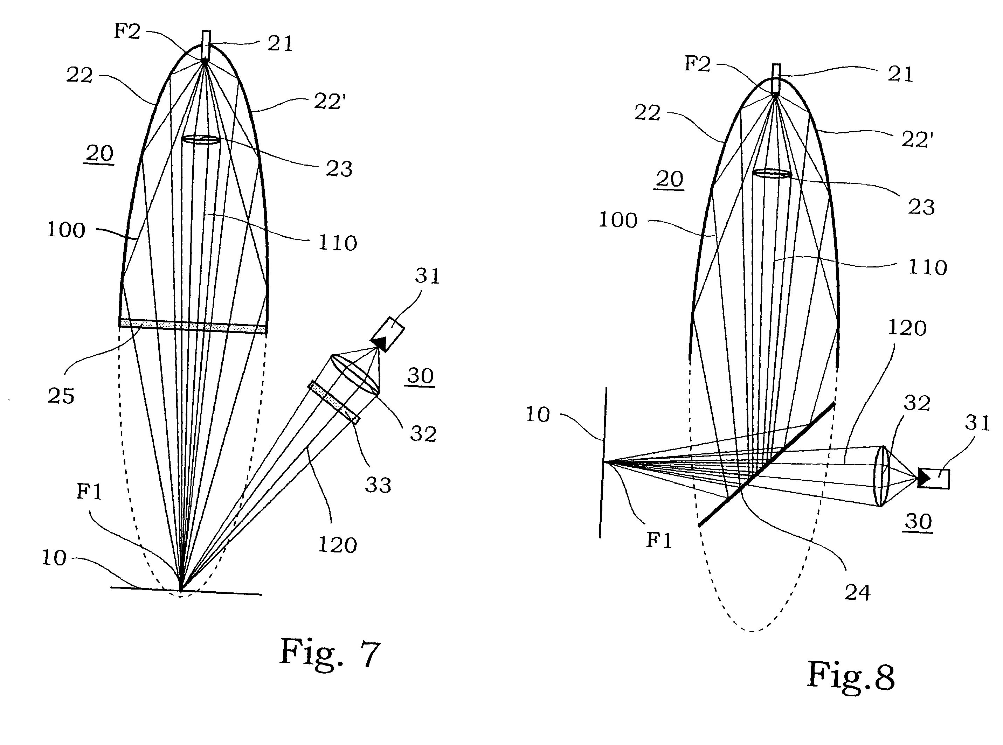

Die Fig. 7 zeigt eine Ausführungsform der Erfindung, bei der im Strahlengang der Beleuchtung zusätzlich Filter bzw. Polarisatoren 25 vorgesehen sind. Diese dienen dazu, das von der Lichtquelle 21 emittierte Licht vor der Beleuchtung des Blattguts in gewünschter Weise zu verändern. Beispielsweise kann es mit Hilfe von Filtern monochromatisiert und/oder durch Polarisatoren polarisiert werden. Selbstverständlich können auch in den Detektoren, hier durch den Detektor 30 repräsentiert, Filter bzw. Polisatoren 33 vorgesehen werden, die das Licht in gewünschter Weise vor der Registrierung durch den Lichtempfänger 31 verändern.

Die Fig. 8 zeigt eine Ausführungsform, bei der das von der Lichtquelle emittierte Licht vor der Beleuchtung des Blattgutes mittels mindestens eines ebenen Spiegels 24 umgelenkt wird. Hierdurch verändert sich die räumliche Lage der Fokuslinie F1. Eine solche Maßnahme kann beispielsweise dann sinnvoll sein, wenn aus bautechnischen Gründen ein Einbau in der vorher beschriebenen Art und Weise nicht möglich ist.

Wird der ebene Spiegel 24 halbdurchlässig gewählt, so ist es möglich, daß das vom Blattgut remittierte Licht von einem Detektor 30 durch den halbdurchlässigen Spiegel hindurch detektiert werden kann. Diese Möglichkeit ist insbesondere dann von Interesse, wenn das Blattgut 10 senkrecht beleuchtet und gleichzeitig das senkrecht remittierte Licht vom Detektor 30 detektiert werden soll.

Um die bei einem halbdurchlässigen Spiegel auftretenden Verluste gering zu halten ist es weiterhin möglich, einen halbdurchlässigen Spiegel zu verwenden, der dichroitische Eigenschaften aufweist. Ein solcher Spiegel reflektiert in einem ersten Wellenlängenbereich nahezu vollständig, während ein zweiter Wellenlängenbereich nahezu vollständig transmittiert wird. Wählt man nun das das Blattgut beleuchtende Licht innerhalb des ersten Wellenlängenbereichs und das vom Blattgut remittierte Licht innerhalb eines zweiten Wellenlängenbereichs, so können die auftretenden Verluste nahezu vollständig vermieden werden.

Ein Wechsel der Wellenlänge zwischen dem beleuchteten Licht und dem remittierten Licht kann beispielsweise durch Fluoreszenzstoffe oder ähnlichen Beigaben des Blattguts hervorgerufen werden.

Weitere nicht in den Figuren dargestellte Ausführungsformen der Erfindung ergeben sich dadurch, daß die Ausführungsform mit Lichtquelle 21 und Spiegelsegment 22 mit optischen Systemen 23 oder Filtern bzw. Polarisatoren 25 oder ebenen Spiegeln 24 in allen möglichen Varianten kombiniert wird.

In einer anderen Weiterbildung der Erfindung wird das von der Lichtquelle 21 emittierte Licht auf Veränderungen überwacht. Diese Veränderungen können beispielsweise durch Alterung oder durch Temperaturänderungen der Lichtquelle 21 verursacht werden.

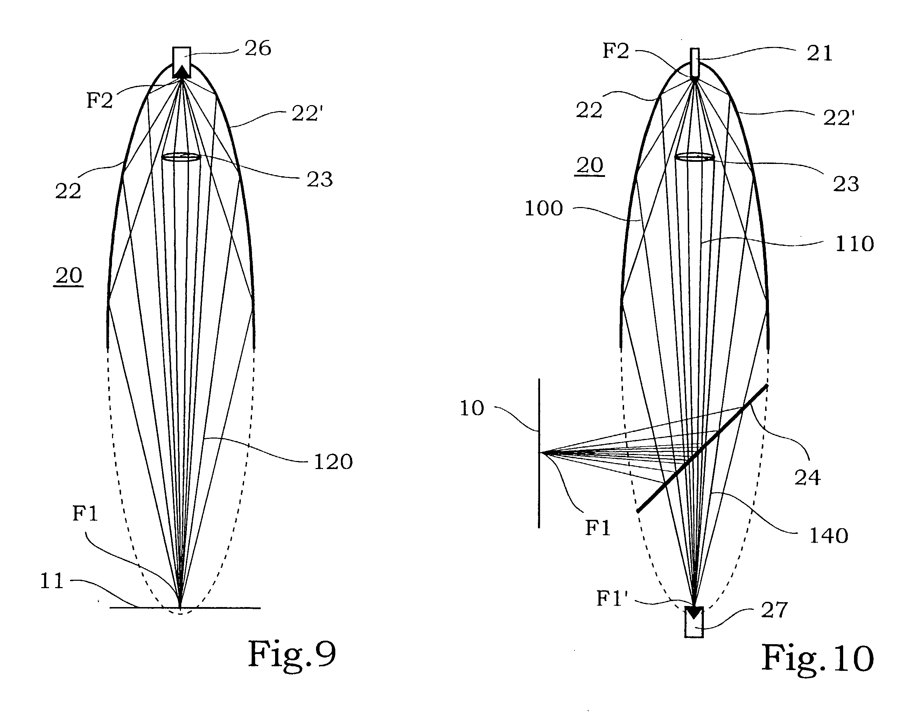

Die Fig. 9 zeigt eine Ausführungsform, bei der in der Fokuslinie F2 mindestens ein Detektor 26 vorgesehen wird, der das remittierte Licht 120 detektiert. Das remittierte Licht 120 kann sowohl vom Blattgut 10 als auch von einem Hintergrund 11 erzeugt werden und wird dann von den Spiegelsegmenten 22 und 22' sowie vom optischen System 23 auf die Fokuslinie F2 fokussiert. Der Hintergrund 11 wird der von der Beleuchtung 20 während der Abwesenheit des Blattgut 10 beleuchtet und kann gegenüber dem Detektor 26 beispielsweise eine weiße oder spiegelnde Fläche aufweisen, so daß die Intensität des remittierten Lichts dort möglichst groß ist.

Wird beispielsweise die Intensität des vom Hintergrund 11 remittierten Lichts 120 detektiert, so können diese Meßwerte mit Referenzwerten verglichen werden. Durch diesen Vergleich können Veränderungen in dem von der Lichtquelle 21 emittierten Licht festgestellt werden.

Zwischen dem vom Hintergrund 11 und dem vom Blattgut reflektierten Licht 120 besteht im allgemeinen ein Intensitätsunterschied. Dieser kann vom Detektor 26 festgestellt werden und zur Detektion von Blattgutanfang bzw. Blattgutende genutzt werden. Der Detektor 26 kann somit auch parallel die Funktion einer Lichtschranke übernehmen.

Zur Verstärkung des Intensitätsunterschieds kann die Fläche des Hintergrunds 11 gegenüber dem Detektor 26 auch dunkler als das Blattgut gewählt werden. Hierdurch wird jedoch die Intensität des reflektierten Lichts 120 geringer.

Durch die Verwendung mehrerer Detektoren 26 können sowohl die Veränderungen des von der Lichtquelle 21 emittierten Lichts als auch die Detektion des Blattguts 10 optimiert werden.

Wird als Lichtquelle 21 eine Reihe von Leuchtdioden verwendet, so können auch einige dieser Leuchtdioden so verschaltet werden, daß sie als Detektoren 26 genutzt werden können.

Die Fig. 10 zeigt eine Ausführungsform, bei der das von der Lichtquelle 21 emittierte Licht mittels eines halbdurchlässigen oder dichroitischen Spiegels 24 vor der Beleuchtung des Blattguts 10 umgelenkt wird, so daß sich die Lage der Fokuslinie F1 verändert. Ein Spiegel 24 dieser Art transmittiert jedoch einen Anteil 140 des auf ihn treffenden Lichts 110,120. Dieser Anteil 140 wird in eine Fokuslinie F1' fokussiert, die der Fokuslinie F1 in ihrer ursprünglichen Lage entspricht. In dieser Fokuslinie F1' wird nun mindestens ein Detektor 27 angebracht, der den transmittierten Anteil 140 detektiert.

Durch einen Vergleich der detektierten Intensitäten des transmittierten Anteils 140 mit Referenzwerten, können Veränderungen in dem von der Lichtquelle 21 emittierten Licht festgestellt werden.

Da bei dieser Ausführungsform die Fokussierung des remittierten Lichts 120 schon mittels der Spiegelsegmente 22 und 22' bzw. dem optischen Systems 23 geschieht, kann in den Detektoren 26 bzw. 27 auf ein entsprechendes optisches System verzichtet werden. Es können hier somit direkt Lichtempfänger verwendet werden.

Weiterhin ist es möglich diese Ausführungsformen miteinander und mit anderen Ausführungsformen der Erfindung in geeigneter Weise zu kombinieren.

## Patentansprüche

1. Vorrichtung zur linienförmigen Beleuchtung von Blattgut, wie z.B. Banknoten oder Wertpapieren, mit
- einem Spiegelsegment eines zylindrischen Spiegels mit elliptischer Grundfläche, das zwei Fokuslinien aufweist und
- einer Lichtquelle, die in der ersten Fokuslinie des Spiegelsegments angebracht ist und deren emittiertes Licht durch Reflexion am Spiegelsegment teilweise auf das in der zweiten Fokuslinie des Spiegelsegments befindliche Blattgut fokussiert wird, und mit
- mindestens einem weiteren Spiegelsegment (22') eines zylindrischen Spiegels mit elliptischer Grundfläche und zwei Fokuslinien (F1, F2), wobei die Spiegelsegmente (22, 22') so angeordnet sind, daß sowohl die ersten als auch die zweiten Fokuslinien aller Spiegelsegmente (22, 22') jeweils in einer ersten bzw. zweiten gemeinsamen Fokuslinie (F1, F2) zusammenfallen und
**dadurch gekennzeichnet, daß**
- die Lichtquelle (21) von Leuchtdioden gebildet wird, die in der ersten Fokuslinie des Spiegelsegments angebracht sind und kaltes Licht emittieren.

2. Vorrichtung nach Anspruch 1, **dadurch gekennzeichnet, daß** die elliptischen Grundflächen der Spiegelsegmente (22, 22') gleich sind.

3. Vorrichtung nach Anspruch 2, **dadurch gekennzeichnet, daß** die Spiegelsegmente (22, 22') spiegelsymmetrisch zu der Ebene angeordnet sind, in der sich die beiden gemeinsamen Fokuslinien (F1, F2) befinden.

4. Vorrichtung nach Anspruch 1, dadurch **gekennzeicnet,** daß die dem Blattgut zugewandten Kanten der Spiegelmente (22, 22') einen Abstand (L, L') aufweisen, der von der ersten Fokuslinie (F2) in Richtung der zweiten Fokuslinie (F1) gemessen wird und kleiner oder gleich dem Abstand (2c) der Fokuslinien ist.

5. Vorrichtung nach Anspruch 1, **dadurch gekennzeichnet, daß** die Spiegelsegmente (22, 22') eine Breite (B) aufweisen, die größer oder gleich der Breite des Blattguts (10) ist.

6. Vorrichtung nach Anspruch 1, **dadurch gekennzeichnet, daß** zusätzlich ein optisches System (23) vorgesehen wird, das die nicht von den Spiegelsegmenten (22, 22') reflektierten Anteile (110) des von der Lichtquelle (21) emittierten Lichts auf die zweite Fokuslinie (F1) fokussiert.

7. Vorrichtung nach Anspruch 1, **dadurch gekennzeichnet, daß** die Lichtquelle (21) eine Reihe von Leuchtdioden aufweist.

8. Vorrichtung nach Anspruch 1, **dadurch gekennzeichnet, daß** zusätzlich Filter und/oder Polarisatoren (25) vorgesehen werden, mittels denen das von der Lichtquelle emittierte Licht (100, 110) vor der Beleuchtung des Blattguts (10) verändert wird.

9. Vorrichtung nach Anspruch 1, **dadurch gekennzeichnet, daß** in der ersten Fokuslinie (F2) mindestens ein Detektor (26) vorgesehen ist, der die vom Blattgut (10) und/oder einem Hintergrund (11) remittierte Strahlung (120) detektiert.

10. Vorrichtung nach Anspruch 1, **dadurch gekennzeichnet, daß** zusätzlich mindestens ein ebener Spiegel (24) vorgesehen wird, der das von der Lichtquelle (21) emittierte Licht (100, 110) vor der Beleuchtung des Blattguts (10) umlenkt, so daß die räumliche Lage der zweiten Fokuslinie (F1) verändert wird.

11. Vorrichtung nach Anspruch 10, **dadurch gekennzeichnet, daß** mindestens ein ebener Spiegel (24) halbdurchlässig ist, so daß das vom Blattgut (10) remittierte Licht (120) von einem Detektor (30) durch den halbdurchlässigen Spiegel (24) hindurch detektiert werden kann.

12. Vorrichtung nach Anspruch 11, **dadurch gekennzeichnet, daß** der halbdurchlässige Spiegel (24) einen ersten Wellenlängenbereich nahezu vollständig reflektiert, während ein zweiter Wellenlängenbereich nahezu vollständig transmittiert wird und das das Blattgut (10) beleuchtende Licht innerhalb des ersten Wellenlängenbereichs und das vom Blattgut remittierte Licht (120) innerhalb des zweiten Wellenlängenbereichs liegt.

13. Vorrichtung nach Anspruch 11 oder 12, **dadurch gekennzeichnet, daß** mindestens ein Detektor (27) in einer Fokuslinie (F1') vorgesehen ist, auf die das vom Spiegel (24) transmittierte Licht (140) fokussiert wird.

## Claims

1. An apparatus for linear illumination of sheet material such as bank notes or papers of value, comprising
a mirror segment of a cylindrical mirror with an elliptical base and having two focal lines, and
a light source which is mounted in the first focal line of the mirror segment and whose emitted light is focused by reflection on the mirror segment partially onto the sheet material located in the second focal line of the mirror segment, and comprising
at least one further mirror segment (22') of a cylindrical mirror with an elliptical base and two focal lines (*F*1, *F*2), the mirror segments (22, 22') being disposed such that both the first and the second focal lines of all mirror segments (22, 22') coincide in first and second common focal lines (*F*1, *F*2), respectively, and
**characterized in that**
the light source (21) is formed by light-emitting diodes mounted in the first focal line of the mirror segment and emitting cold light.

2. An apparatus according to claim 1, **characterized in that** the elliptical bases of the mirror segments (22, 22') are equal.

3. An apparatus according to claim 2, **characterized in that** the mirror segments (22, 22') are disposed mirror-symmetrically to the plane in which the two common focal lines (*F*1, *F*2) are located.

4. An apparatus according to claim 1, **characterized in that** the edges of the mirror segments (22, 22') facing the sheet material have a distance (*L*, *L*') which is measured from the first focal line (*F*2) in the direction of the second focal line (*F*1) and is smaller than or equal to the distance (2*c*) of the focal lines.

5. An apparatus according to claim 1, **characterized in that** the mirror segments (22, 22') have a width (*B*) which is greater than or equal to the width of the sheet material (10).

6. An apparatus according to claim 1, **characterized in that** an optical system (23) is additionally provided for focusing onto the second focal line (*F*1) the portions (110) of the light emitted by the light source (21) not reflected by the mirror segments (22, 22').

7. An apparatus according to claim 1, **characterized in that** the light source (21) has an array of light-emitting diodes.

8. An apparatus according to claim 1, **characterized in that** filters and/or polarizers (25) are additionally provided for changing the light (100, 110) emitted by the light source before illumination of the sheet material (10).

9. An apparatus according to claim 1, **characterized in that** at least one detector (26) is provided in the first focal line (*F*2) for detecting the radiation (120) diffusely reflected by the sheet material (10) and/or a background (11).

10. An apparatus according to claim 1, **characterized in that** at least one plane mirror (24) is additionally provided for deflecting the light (100, 110) emitted by the light source (21) before illumination of the sheet material (10) so as to change the spatial position of the second focal line (*F*1).

11. An apparatus according to claim 10, **characterized in that** at least one plane mirror (24) is semitransparent so that the light (120) diffusely reflected by the sheet material (10) can be detected by a detector (30) through the semitransparent mirror (24).

12. An apparatus according to claim 11, **characterized in that** the semitransparent mirror (24) reflects a first wave range almost completely, while a second wave range is almost completely transmitted, and the light illuminating the sheet material (10) is within the first wave range and the light (120) diffusely reflected by the sheet material within the second wave range.

13. An apparatus according to claim 11 or 12, **characterized in that** at least one detector (27) is provided in a focal line (*F*1') onto which the light (140) transmitted by the mirror (24) is focused.

## Revendications

1. Dispositif pour l'éclairage en forme de ligne de biens en forme de feuille, comme par exemple des billets de banque ou des papiers de valeur, avec :
- un segment de miroir d'un miroir cylindrique avec une surface de base elliptique qui présente deux lignes de foyer ; et
- une source de lumière qui est placée dans la première ligne de foyer du segment de miroir et dont la lumière émise par réflexion sur le segment de miroir est focalisée en partie sur le bien en forme de feuille se trouvant dans la deuxième ligne de foyer du segment de miroir, et avec
- au moins un autre segment de miroir (22') d'un miroir cylindrique avec une surface de base elliptique et deux lignes de foyer (F1, F2), les segments de miroir (22, 22') étant agencés de telle sorte que, aussi bien les premières lignes de foyer que les secondes lignes de foyer de tous les segments de miroir (22, 22') se retrouvent chacune dans une première, respectivement dans une deuxième, lignes de foyer communes (F1, F2), et
**caractérisé en ce que**:
- la source de lumière (21) est constituée de diodes luminescentes, qui sont placées dans la première ligne de foyer du segment de miroir et qui émettent de la lumière froide.

2. Dispositif selon la revendication 1, **caractérisé en ce que** les surfaces de base elliptiques des segments de miroir (22, 22') sont identiques.

3. Dispositif selon la revendication 2, **caractérisé en ce que** les segments de miroir (22, 22') sont agencés de manière symétrique par rapport à un miroir et par rapport au plan dans lequel les deux lignes de foyer communes (F1, F2) se trouvent.

4. Dispositif selon la revendication 1, **caractérisé en ce que** les bords, voisins du bien en forme de feuille, des segments de miroir (22, 22') présentent un écart (L, L') mesuré à partir de la première ligne de foyer (F2) et en direction de la deuxième ligne de foyer (F1) et qui est plus petit ou égal à l'écart (2c) des lignes de foyer.

5. Dispositif selon la revendication 1, **caractérisé en ce que** les segments de miroir (22, 22') présentent une largeur (B), qui est plus grande ou égale à la largeur des biens en forme de feuille (10).

6. Dispositif selon la revendication 1, **caractérisé en ce qu'**un système optique (23) est prévu en plus, qui focalise sur la deuxième ligne de foyers (F1), la partie (110), qui n'a pas été réfléchie par les segments de miroir (22, 22'), de la lumière émise par la source de lumière (21).

7. Dispositif selon la revendication 1, **caractérisé en ce que** la source de lumière (21) présente une rangée de diodes luminescentes.

8. Dispositif selon la revendication 1, **caractérisé en ce que** des filtres et/ou des polariseurs (25) sont prévus, au moyen desquels la lumière (100, 110) émise par la source de lumière, est modifiée avant l'éclairage des biens en forme de feuille (10).

9. Dispositif selon la revendication 1, **caractérisé en ce que**, sur la première ligne de foyer (F2) est prévu au moins un détecteur (26), qui détecte les rayonnements (120) réémis à partir du bien en forme de feuille (10) et/ou à partir du plan de fond (11).

10. Dispositif selon la revendication 1, **caractérisé en ce que**, au moins un miroir plan (24) est prévu en plus, qui dévie la lumière (100, 110) émise par la source de lumière (21), avant l'éclairage du bien en forme de feuille (10), si bien que la situation dans l'espace de la deuxième ligne de foyer (F1) est modifiée.

11. Dispositif selon la revendication 10, **caractérisé en ce que**, au moins un miroir plan (24) est semi-translucide, si bien que la lumière (120), réémise par le bien en forme de feuille (10), peut être détectée par un détecteur (30) à travers le miroir (24) semi-translucide.

12. Dispositif selon la revendication 11, **caractérisé en ce que** le miroir (24) semi-translucide refléchit presque entièrement un premier domaine de longueur d'ondes, tandis qu'un deuxième domaine de longueur d'onde est presque entièrement transmis, et **en ce que** la lumière éclairant le bien en forme de feuille (10) est à l'intérieur du premier domaine de longueur d'onde et la lumière (120) réémise par le bien en forme de feuille est à l'intérieur du deuxième domaine de longueur d'onde.

13. Dispositif selon la revendication 11 ou 12, **caractérisé en ce que** au moins un détecteur (27) est prévu dans une ligne de foyer (F1'), sur laquelle la lumière (140) transmise par le miroir (24) est focalisée.
